# EUROPEAN PATENT SPECIFICATION

(11) **EP 3 196 488 B1**
(45) Date of publication and mention of the grant of the patent: **05.08.2020**
(21) Application number: 15842357.4
(22) Date of filing: 16.09.2015
(51) Int. Cl.: F16C 11/06

(54) **BALL JOINT**
KUGELGELENK
JOINT À ROTULE

(30) Priority: 18.09.2014 JP 2014189809
(43) Date of publication of application: 26.07.2017
(73) Proprietor: KABUSHIKI KAISHA SOMIC ISHIKAWA, Sumida-ku, Tokyo 130-0004 (JP)
(72) Inventor: UMEI Takashi, Hamamatsu-shi Shizuoka 435-8560 (JP); MIZUTANI Masayuki, Hamamatsu-shi Shizuoka 435-8560 (JP)
(74) Representative: Hancox, Jonathan Christopher
(86) International application number: PCT/JP2015/076319
(87) International publication number: WO 2016/043226

(56) References cited:
- JP-A- H07 279 943
- JP-A- H07 279 943
- JP-B1- S4 633 042
- JP-B1- S4 633 042
- JP-B1- S4 713 804
- JP-B2- S5 727 325
- JP-B2- S5 727 325
- JP-U- S6 099 320
- JP-U- S6 099 320
- US-A- 3 506 289
- US-A- 5 601 378

## Description

### TECHNICAL FIELD

The present invention relates to a ball joint including a housing including a deformed part forming an edge portion of an opening part of a cylindrical housing body and being plastically deformed to hold a bearing sheet.

### BACKGROUND ART

A ball joint conventionally used for example in a suspension device or a steering device of a vehicle such as an automobile includes: a ball stud corresponding to a ball-side member including a ball part and a stud part as a shaft part projecting from the ball part; a circular cylindrical ball sheet corresponding to a bearing sheet made of synthetic resin, for example, that holds the ball part of the ball stud in a manner that allows rotation of the ball part; a housing in the shape of a circular cylinder with a closed bottom including a housing body with an inner chamber where the ball sheet holding the ball part is received; and a circular cylindrical dust cover attached between the outer peripheral surface of the housing body on one end side and the outer peripheral surface of the stud part.

Such a dust cover may be configured by burying an insert ring into an abutting part (lip part) corresponding to a housing-side end portion as a large-diameter side of the dust cover and fixing the dust cover to an end portion of the housing body by press fitting. This dust cover has a substantially straight shape. Hence, during swinging motion of the ball stud, the dust cover is hard to bend and is pulled to lift the abutting part. This causes risk of reduction in sealing performance or increased probability of deterioration due to insufficient strength to withstand bending.

In response to the aforementioned risk, the configuration has been adopted in which the dust cover is formed into a shape where the dust cover bulges radially at an intermediate position between opposite ends of the dust cover, a fitting groove is formed at the outer peripheral surface of the housing body by cutting, for example, an end portion of the dust cover is fitted in this fitting groove, and then, the dust cover is fixed with an annular clip. In this case, while sealing performance is ensured, cutting process for forming the fitting groove in the housing body is required. This causes increase in production costs in terms of increase in man-hours and increase in processing costs, etc.

The following method has been known that allows the dust cover to be fixed with a clip without requiring cutting process . The ball sheet holding the ball part is press fitted into the inner chamber of the housing. Next, a deformed part at an opening-side end portion of the housing is plastically deformed (deformed by swaging) with a roller or a press to make the deformed part project toward an inner peripheral direction, thereby retaining and fixing the ball sheet and the ball part together in the housing. The deformed part is further made to jut out toward an outer peripheral direction to form a holding part holding an end portion of the dust cover (see PTL 1 and PTL 2, for example).

### CITATION LIST

### Patent Literature

PTL 1: Japanese Laid-open Patent Publication No.7-279943 (p. 3 and Fig. 4)
PTL 2: Japanese Examined Patent Publication No.5-1094 (pp. 2 and 3 and Figs. 2 and 3)
PTL 3: US 5, 601, 378 A (Fukukawa et al.), which discloses a rod-end bearing device including a ball seat crimped in place within an inner chamber of a housing.
PTL 4: JP H07 279943 A (Rhythm Corp), which discloses a ball joint manufacturing process in which the upper part of the hollow cylindrical part is bent inwardly after a bearing and ball stud are inserted.
PTL 5: JP S46 33042 B1 (TRW, Inc.), which discloses a holding part being formed by a deformation process.
PTL 6: JP S60 99320 U (Toyota Motor Corp.), which also discloses a holding part being formed by a deformation process.
PTL 7: US 3,506,289 A (Gottschald), which discloses a ball joint housing and an arrangement for holding a bellows in place in a groove in the housing, according to the preamble of claim 1.

### SUMMARY OF INVENTION

### Technical Problem

According to the aforementioned housing, however, the deformed part simply having a straight shape is plastically deformed by applying a load on the deformed part. Hence, the load acts further on a part of the housing where the ball sheet is housed. Hence, in some cases, in order to avoid unnecessary deformation, adjustment of the load for the plastic deformation or an additional configuration, etc is required.

The aforementioned problem occurs not only in a ball joint for use in a vehicle and a housing of this ball joint but also in a ball joint used in any place and a housing of this ball joint.

The present invention has been made in view of these circumstances. It is an object of the present invention to provide a ball joint having a housing with a holding part which holds an end portion of a dust cover and which can be formed at a low cost by deforming only a deformed part reliably without requiring additional process.

### Solution to Problem

The invention provides a ball joint in accordance with claim 1.

### Advantageous Effects of Invention

According to the ball joint as recited in claim 1, the sum of the angle of the outer side surface of the receiving part provided on one end side of the cylindrical housing body and the angle of the outer side surface of the deformed part adjacent to the receiving part relative to the axis-perpendicular direction of the housing body is set to be less than 180°. By doing so, the inflected part is formed at an outer side surface of the housing body between the deformed part and the receiving part. A load to be applied for plastic deformation on the deformed part in the axis direction of the housing body is caused to act intensively on the inflected part, so that the load hardly exerts an impact on the receiving part side. Only the deformed part is deformed reliably and the holding part holding the end portion of the dust cover can be formed at a low cost without requiring additional process.

Further, the angle of the outer side surface of the receiving part relative to the axis-perpendicular direction of the housing body is set to be less than 90°. This makes the receiving part jut out and the end portion of the dust cover can be reliably held by the holding part formed between the receiving part and the deformed part after the plastic deformation.

In the ball joint as recited in claim 2, the holding part holding the end portion of the dust cover can be formed at a low cost without requiring additional process. Thus, the ball joint achieving stable performance can be provided at a low cost.

According to the ball joint as recited in claim 3, the bearing sheet is formed to be thicker gradually from the sheet inflected part that permits deformation of a portion along the outer circumferential surface of the ball part and on the opening side to occur in response to plastic deformation of the deformed part of the housing toward the opening side. By doing so, most of a deformation load applied on the deformed part acts on a position where the bearing sheet has a large thickness. Thus, in addition to achieving the effect of the ball joint as recited in claim 2, the ball joint as recited in claim 3 makes it possible to reliably clamp the bearing sheet between the ball part and the deformed part to fix the bearing sheet stably in the inner chamber.

### BRIEF DESCRIPTION OF DRAWINGS

[Fig. 1] Fig. 1 is a longitudinal sectional view showing a housing according to a first embodiment of the present invention.
[Fig. 2] Fig. 2 is a longitudinal sectional view showing a ball joint including the same housing.
[Fig. 3] Figs. 3(a) to 3(c) are longitudinal sectional views each showing a part of a method of manufacturing the same ball joint in the order from Figs. 3(a) to 3(c).
[Fig. 4] Figs. 4(a) to 4(d) are longitudinal sectional views each showing a part of a conventional housing in an enlarged manner as Comparative Example.
[Fig. 5] Fig. 5 is a longitudinal sectional view showing a housing according to a second embodiment of the present invention.
[Fig. 6] Fig. 6 is a longitudinal sectional view showing a housing according to a third embodiment of the present invention.

### DESCRIPTION OF EMBODIMENTS

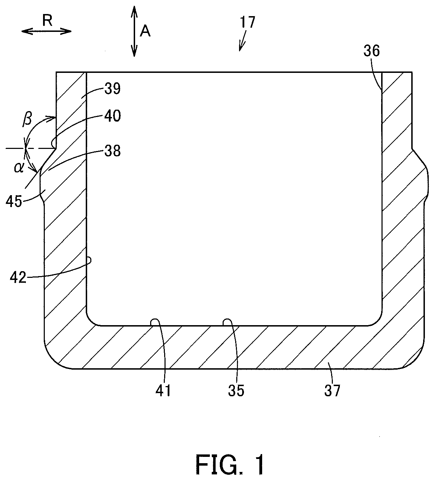

A first embodiment of the present invention is described below in terms of its construction by referring to Figs. 1 to 3.

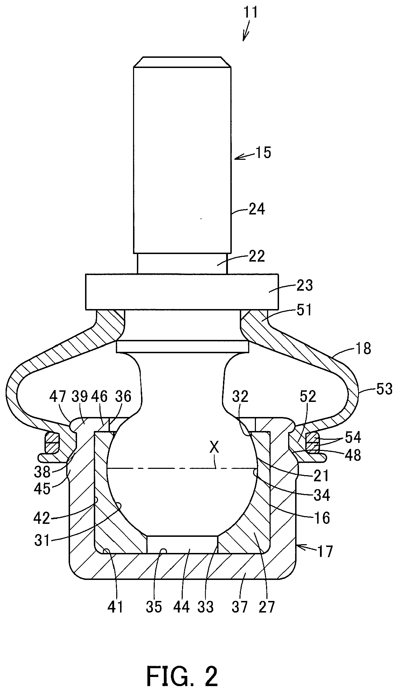

Referring to Fig. 2, reference number 11 denotes a ball joint. The ball joint 11 is used for example in a suspension device or a steering device of a vehicle such as an automobile. The ball joint 11 includes: a ball stud 15 corresponding to a ball-side member; a ball sheet 16 corresponding to a bearing sheet that holds a part of the ball stud 15; a housing 17 corresponding to a receiving-side member that holds the part of the ball stud 15 and the ball sheet 16 together; and a dust cover 18 corresponding to an anti-dust member arranged between the ball stud 15 and the housing 17. A vertical direction mentioned below means a vertical direction of Fig. 2.

The ball stud 15 is made of metal, for example. The ball stud 15 has a ball part 21 as a substantially spherical ball head part, and a stud part 22 that is a shaft part like a round shaft projecting from the ball part 21 coaxially with the ball part 21 while extending lengthwise in the vertical direction. A flange part 23 is formed integrally with the stud part 22 on an outer peripheral side of the stud part 22 so as to project toward outer side from an intermediate position of the stud part 22 in its lengthwise direction. The stud part 22 has an outer peripheral surface with a screw groove 24 as a connection part formed on an upper end side of the stud part 22. A nut not shown in the drawings is threadedly engaged with the screw groove 24 to fixedly clamp a target of fixation (not shown in the drawings) between the flange part 23 and the nut, thereby connecting the ball joint 11 to the target of fixation.

For example, the ball sheet 16 is made of synthetic resin. The ball sheet 16 includes a sheet body 27 corresponding to a circular cylindrical body part. The sheet body 27 includes a sliding contact surface 31 corresponding to a holding surface in the shape of a spherical surface that holds the outer circumferential surface of the ball part 21 including an equator X thereof in a manner that allows rotation of the ball part 21. The sheet body 27 further includes an upper opening 32 as an (one) opening communicating with the sliding contact surface 31, and a lower opening 33 as an opposite opening communicating with the sliding contact surface 31. The openings 32 and 33 are located at an upper end and a lower end that are opposite ends of the ball sheet 16 (sheet body 27) in an axis direction A (an axis direction of the ball joint 11) corresponding to a specified direction. In the sheet body 27, the openings 32 and 33 each have an opening area smaller than the diameter dimension of the ball part 21 to prevent the ball part 21 from coming off the ball sheet 16. The sheet body 27 is formed to be thicker gradually from a position corresponding to the equator X of the ball part 21 at a substantially central portion between the opposite ends toward the upper opening 32 side. In this way, a sheet inflected part 34 of the ball sheet 16 (sheet body 27) is formed at the position of the sheet body 27 corresponding to the equator X of the ball part 21. The equator X of the ball part 21 means a position where the diameter dimension of the ball part 21 is at a maximum in an axis direction of the ball stud 15.

The housing 17 shown in Figs. 1 and 2 is also called a socket and the housing 17 is integrally formed of metal such as iron or aluminum, for example. The housing 17 includes a housing body 37 in the shape of a circular cylinder with a closed bottom. The housing body 37 includes an inner chamber 35 where the ball part 21 is held through intervention of the ball sheet 16, and an opening part 36 communicating with the upper end corresponding to one end of the inner chamber 35 in the axis direction A. A receiving part 38 receiving a lower end portion of the dust cover 18 and a deformed part 39 for holding the ball sheet 16 are formed on an upper end side corresponding to one end side of the housing body 37 to be adjacent to each other. An inflected part 40 is defined as a part where the receiving part 38 and the deformed part 39 are adjacent to each other. For example, the housing body 37 may include a coupled part as an integral part to be coupled to an arm part of a stabilizer link not shown in the drawings. Alternatively, the housing body 37 may be formed integrally with an end portion of a tie rod end.

The inner chamber 35 is a part to which the ball sheet 16 holding the ball part 21 is fitted, specifically, a part where the ball part 21 is received. The inner chamber 35 includes a circular bottom surface part 41 extending like a flat surface along an axis-perpendicular direction R and a circular cylindrical peripheral surface part 42 standing from a peripheral edge of the bottom surface part 41.

The bottom surface part 41 tightly contacts a lower end corresponding to an opposite end of the ball sheet 16 in the axis direction A fitted in the inner chamber 35. The bottom surface part 41 and the lower opening 33 of the ball sheet 16 define a grease storage space 44 therebetween that is a lubricant housing part to house grease as a lubricant not shown in the drawings.

The peripheral surface part 42 tightly contacts the outer peripheral surface of the sheet body 27 of the ball sheet 16 fitted in the inner chamber 35 with no space therebetween.

The opening part 36 is opened at the upper end of the inner chamber 35. The opening part 36 has a circular shape with an outer edge defined by the peripheral surface part 42.

The receiving part 38 is located on the upper end side corresponding to the one end side of the housing body 37 and extends continuously in a band-like shape around the entire periphery of the housing body 37. Specifically, the receiving part 38 is located above the sheet inflected part 34 of the ball sheet 16 fitted in the inner chamber 35. The receiving part 38 has an inner peripheral surface as a part holding the ball sheet 16. The receiving part 38 has an outer peripheral surface formed to be gradually inclined toward an inner side corresponding to a central axis side of the housing body 37, in other words, to be reduced in diameter dimension (to shrink in diameter) as the outer peripheral surface extends toward the deformed part 39 (inflected part 40) to be directed toward the upper end of the housing body 37. An angle α of the outer peripheral surface of the receiving part 38 relative to the axis-perpendicular direction R of the housing body 37 is set to be less than 90° (acute angle) . This makes the receiving part 38 project (jut out) radially toward an outer side of the housing body 37 from the inflected part 40. Further, the outer peripheral surface of the receiving part 38 at its lower end portion forms a projecting part 45 that projects in an outer radial direction from the outer peripheral surface of the housing body 37. The receiving part 38 is a part formed simultaneously with shape forming (forging) of the housing 17 and is not a part formed, for example, by cutting process after shape forming of the housing 17. In this embodiment, the outer peripheral surface of the receiving part 38 has a flat surface shape entirely inclined to the same angle. Alternatively, the outer peripheral surface of the receiving part 38 may partially be provided with recesses and protrusions or may be formed as a curved surface. Thus, the angle α mentioned herein means an angle of a tangent plane of the outer peripheral surface of the receiving part 38 at the position of the inflected part 40 relative to the axis-perpendicular direction R.

The deformed part 39 forms the entire periphery of an edge portion of the opening part 36 at one end portion of the housing body 37. In response to application of a load acting from top to bottom in the axis direction A of the housing body 37, the deformed part 39 is plastically deformed, specifically, deformed by swaging to project toward an inner side corresponding to the central axis side and to project toward an outer side opposite the inner side. As a result, a pressing part 46 projecting toward an inner side is formed to press the ball sheet 16 in the axis direction A, thereby retaining and fixing the ball sheet 16 in the inner chamber 35. Further, an opposite receiving part 47 projecting toward an outer side is formed to form a fitting groove 48 between the opposite receiving part 47 and the outer peripheral surface of the receiving part 38 (Fig. 2). The fitting groove 48 is a holding part holding the lower end portion of the dust cover 18. Specifically, the deformed part 39 is located above the sheet inflected part 34 of the ball sheet 16 fitted to the inner chamber 35. The deformed part 39 is formed in a substantially linear shape extending toward an upper end portion of the housing body 37. Specifically, the deformed part 39 is formed to have a diameter dimension substantially constant from the inflected part 40 as a lower end portion toward an upper end portion of the deformed part 39. Thus, an angle β of the outer peripheral surface of the deformed part 39 relative to the axis-perpendicular direction R of the housing body 37 is set at about 90°. By doing so, the sum of the angle α of the outer peripheral surface of the receiving part 38 and the angle β of the outer peripheral surface of the deformed part 39 relative to the axis-perpendicular direction R of the housing body 37 is set to be less than 180° (α + β < 180°). In this embodiment, the outer peripheral surface of the deformed part 39 has a shape like a flat surface entirely inclined to the same angle. Alternatively, the outer peripheral surface of the deformed part 39 may partially be provided with recesses and protrusions or may be formed as a curved surface. Thus, the angle β mentioned herein means an angle of a tangent plane of the outer peripheral surface of the deformed part 39 at the position of the inflected part 40 relative to the axis-perpendicular direction R.

The inflected part 40 is a changeover part between the angle α of the outer peripheral surface of the receiving part 38 and the angle β of the outer peripheral surface of the deformed part 39 relative to the axis-perpendicular direction R. The inflected part 40 is formed by the outer peripheral surface of the receiving part 38 and the outer peripheral surface of the deformed part 39 into a substantially V-shaped groove part. The inflected part 40 extends continuously over the entire periphery of the housing body 37.

The dust cover 18 is also called a dust seal or a boot. For example, the dust cover 18 is entirely formed of soft rubber or soft synthetic resin, etc. An upper end portion of the dust cover 18 forms an upper lip part 51 as an (one) abutting part fitted to the ball stud 15 while extending over the lower end of the flange part 23 and the outer periphery of the stud part 22. The lower end portion of the dust cover 18 forms a lower lip part 52 as an (opposite) abutting part fitted to the fitting groove 48 formed in the housing body 37 of the housing 17. A bulging part 53 radially bulging is formed between the opposite end portions (between the upper and lower lip parts 51 and 52) of the dust cover 18. The bulging part 53 is to receive a deformation load of the dust cover 18 during swinging motion of the ball stud 15. Thus, the dust cover 18 has a compressed circular cylindrical shape having a larger diameter dimension at the bulging part 53 than its axis dimension. The upper lip part 51 of the dust cover 18 is fixed by fastening the outer periphery of the stud part 22 of the ball stud 15. The lower lip part 52 of the dust cover 18 is held and fixed in the fitting groove 48 with a clip 54 as a fixing member having a substantially circular ring shape to cover the opening part 36 of the housing body 37 of the housing 17, thereby preventing entry of dust through the opening part 36.

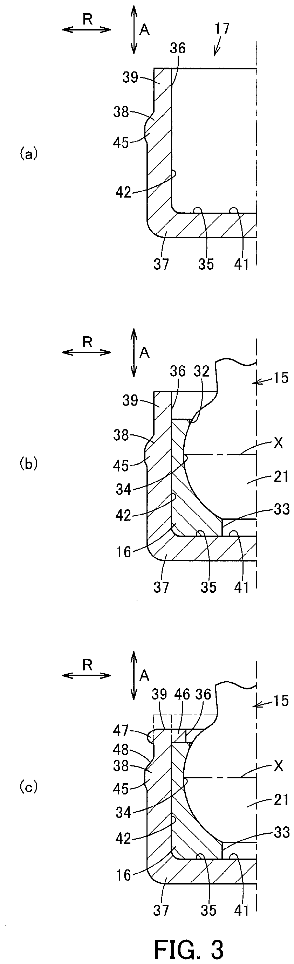

A method of manufacturing the ball joint 11 of the aforementioned first embodiment is described next by further referring to Fig. 3. The ball joint 11 is basically bilaterally symmetric. Thus, only one side of the ball joint 11 is shown in Fig. 3 and the opposite side is omitted to be shown.

First, the shape of the housing 17 is formed. In this state, the receiving part 38, the deformed part 39, and the inflected part 40 of the housing 17 are formed. The outer peripheral surface of the receiving part 38 is inclined to the angle α (< 90°) relative to the axis-perpendicular direction R. The outer peripheral surface of the deformed part 39 is inclined to the angle β(≤ 90°) relative to the axis-perpendicular direction R to extend in a direction substantially parallel to the axis direction A in this embodiment. The sum of the angles α and β of the outer peripheral surfaces of the receiving part 38 and the deformed part 39 respectively is less than 180° (Fig. 3(a)).

The ball part 21 of the ball stud 15 is press fitted into the ball sheet 16 having a shape formed separately to be held on the sliding contact surface 31. Instead of forming the ball sheet 16 separately from the ball part 21 and press fitting the ball part 21, the ball sheet 16 may also be configured in a manner such that the ball part 21 is formed as a core and the ball sheet 16 is formed on the outer circumferential surface of the ball part 21 by injection molding, for example.

Next, the ball sheet 16 holding the ball part 21 is press fitted into the inner chamber 35 of the housing body 37 of the housing 17 through the opening part 36 (Fig. 3(b)). In this state, the sheet inflected part 34 of the ball sheet 16 is located below the receiving part 38, the inflected part 40, and the deformed part 39 of the housing 17, while an upper end portion of the ball sheet 16 (portion on the upper opening 32 side) is located at substantially the same level as the inflected part 40 or slightly below the inflected part 40.

Then, a load is applied from above in the axis direction A on the deformed part 39 with a roller or a press so as to act on the entire periphery of the deformed part 39. By doing so, the deformed part 39 is plastically deformed (deformed by swaging). The sum of the angle α of the outer peripheral surface of the receiving part 38 relative to the axis-perpendicular direction R and the angle β of the outer peripheral surface of the deformed part 39 relative to the axis-perpendicular direction R is set to be less than 180°. Thus, at this time, the deformation load acts intensively on the inflected part 40. This basically deforms only the deformed part 39 from the inflected part 40, while the load does not act on the receiving part 38. The deformed part 39 is plastically deformed in such a manner that the thickness of the deformed part 39 extends toward an inner side corresponding to the central axis side of the housing body 37 (housing 17) and toward an outer side opposite to the inner side. This makes the pressing part 46 press an upper end portion, specifically, a portion on the upper opening 32 side of the sheet body 27 of the ball sheet 16 housed in the inner chamber 35 toward the outer circumferential surface side of the ball part 21 below the upper end portion of the sheet body 27 to deform this upper end portion along the outer circumferential surface of the ball part 21. Further, with the sliding contact surface 31 tightly contacting the outer circumferential surface of the ball part 21, the upper end portion of the sheet body 27 of the ball sheet 16 (an edge portion of the upper opening 32) is clamped between the ball part 21 and the pressing part 46. In this state, the ball sheet 16 is held in the inner chamber 35. Further, the fitting groove 48 is formed between the opposite receiving part 47 extending toward an outer side formed of the deformed part 39 as a result of its plastic deformation and the receiving part 38 (Fig. 3(c)).

Then, the lower lip part 52 at the lower end portion of the dust cover 18 is fitted in the fitting groove 48. Further, abutting contact is formed between the upper lip part 51 at the upper end portion of the dust cover 18 and a lower portion of the flange part 23 to fit the upper lip part 51 to the outer peripheral surface of the stud part 22. Then, the lower lip part 52 is held and fixed in the fitting groove 48 with the clip 54.

As described above, according to the aforementioned first embodiment, the sum of the angle α of the outer peripheral surface of the receiving part 38 provided on the upper end side of the cylindrical housing body 37 and the angle β of the outer peripheral surface of the deformed part 39 adjacent to the receiving part 38 relative to the axis-perpendicular direction R of the housing body 37 is set to be less than 180°. By doing so, the inflected part 40 is formed at the outer peripheral surface of the housing body 37 between the deformed part 39 and the receiving part 38. Thus, a load to be applied for plastic deformation on the deformed part 39 in the axis direction of the housing body 37 is caused to act intensively on the inflected part 40, so that the load hardly exerts an impact on the receiving part 38 side. As a result, only the deformed part 39 is deformed reliably and the fitting groove 48 holding the lower end portion (lower lip part 52) of the dust cover 18 can be formed at a low cost without requiring additional process such as cutting.

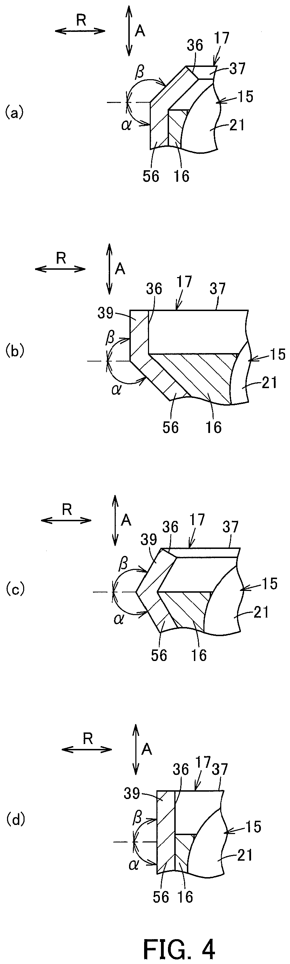

Specifically, referring to each of cases shown in Figs. 4(a) to 4(d) as Comparative Example, the sum of an angle β of the outer peripheral surface of the deformed part 39 relative to the axis-perpendicular direction R and an angle α of a part 56 of the housing body 37 adjacent to and below the deformed part 39 and holding the ball sheet 16 is set at 180° or more. In these cases, a deformation load applied on the deformed part 39 is applied to the housing body 37. This causes risk of the occurrence of unnecessary deformation at the part 56 of the housing body 37 holding the ball sheet 16. By contrast, according to this embodiment, such unnecessary deformation is unlikely to occur at the receiving part 38, resulting in a low impact on holding of the ball sheet 16 by the housing 17.

The receiving part 38 is provided by shape forming. This enables manufacture at lower costs, compared to provision by cutting, for example. Further, the angle of the outer peripheral surface of the receiving part 38 relative to the axis-perpendicular direction of the housing body 37 is set to be less than 90°. This makes the receiving part 38 jut out radially toward an outer side. Thus, the lower lip part 52 at the lower end portion of the dust cover 18 can reliably be held in the fitting groove 48 formed between the receiving part 38 and the deformed part 39 after the plastic deformation.

According to the invention, the outer peripheral surface of the receiving part 38 at its lower end side forms the projecting part 45 that projects radially toward an outer side of the outer peripheral surface of the housing body 37. This can increase a contact area of the receiving part 38 with the lower lip part 52 of the dust cover 18, so that the lower lip part 52 can be held more stably in the fitting groove 48.

By the provision of the aforementioned housing 17, the fitting groove 48 holding the lower end portion (lower lip part 52) of the dust cover 18 can be formed at a low cost without requiring additional process such as cutting. Thus, the ball joint 11 achieving stable performance can be provided at a low cost. Specifically, the following configuration can be adopted: the lower end portion (lower lip part 52) of the dust cover 18, which includes the bulging part 53 between the opposite ends of the dust cover 18 to receive a deformation load on the dust cover 18 during swinging motion of the ball stud 15, is fixed in the fitting groove 48 with the clip 54. This can prevent lift, for example of the lower lip part 52 of the dust cover 18 to be caused by swinging motion of the ball stud 15. Thus, sealing performance can be ensured and performance deterioration due to entry of dust can be prevented reliably. Further, strength to withstand bending can be ensured to suppress early deterioration.

Additionally, the ball sheet 16 is formed to be thicker gradually from the sheet inflected part 34 that permits deformation of a portion along the outer circumferential surface of the ball part 21 and on the upper opening 32 side to occur in response to plastic deformation of the deformed part 39 of the housing 17 toward the upper opening 32 side. By doing so, most of a deformation load applied on the deformed part 39 acts on a position where the ball sheet 16 has a large thickness (position on an upper end side of the sheet inflected part 34). In this way, the ball sheet 16 can reliably be clamped between the ball part 21 and the deformed part 39 and can stably be fixed in the inner chamber 35.

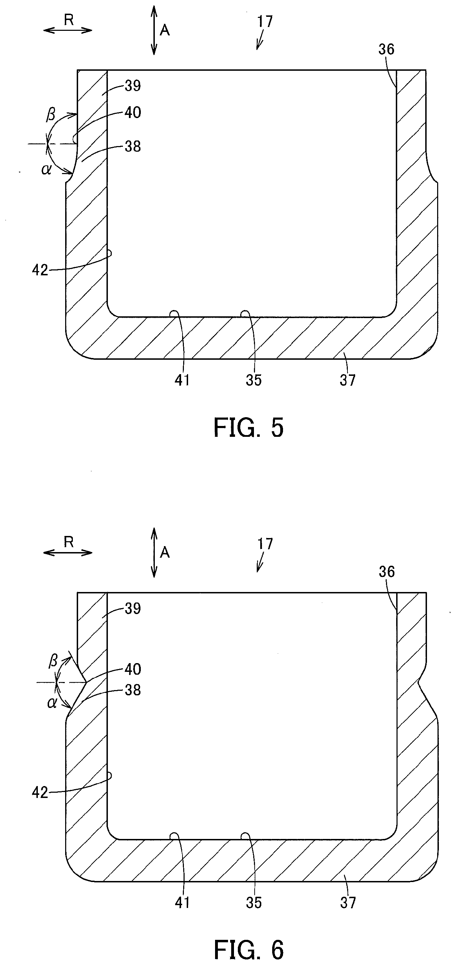

In the aforementioned first embodiment, as in a second embodiment shown in Fig. 5, the angle α of the outer peripheral surface of the receiving part 38 relative to the axis-perpendicular direction R may be set at a larger angle to set the sum of the angle α and the angle β of the outer peripheral surface of the deformed part 39 relative to the axis-perpendicular direction R to be less than 180° and at a value close to 180°. In this case, the inflected part 40 does not have a definite groove shape. However, working effect similar to that of the aforementioned first embodiment can still be achieved. In this case, by forming the receiving part 38 in such a manner that a lower end portion of the receiving part 38 is bent to extend along the axis-perpendicular direction R, for example, the lower lip part 52 of the dust cover 18 can be held more stably in the fitting groove 48 by the receiving part 38 without making a lower end side of the outer peripheral surface of the receiving part 38 project more than necessary from the outer peripheral surface of the housing body 37, specifically, without providing the projecting part 45. Thus, the outer diameter dimension of the housing 17 can be further reduced, so that the size of the housing 17 and that of the ball joint 11 can be further reduced.

In each of the aforementioned embodiments, as in a third embodiment shown in Fig. 6, the angle β of the outer peripheral surface of the deformed part 39 relative to the axis-perpendicular direction R is set to be less than 90° (acute angle). For example, the angle β may be set to be substantially the same as the angle α of the outer peripheral surface of the receiving part 38 relative to the axis-perpendicular direction R. In this case, if a load is applied from above along the axis direction A with a roller or a press on the deformed part 39 of the housing 17 with the inner chamber 35 housing the ball sheet 16 so as to act on the entire periphery of the deformed part 39, the opposite receiving part 47 can easily be further stretched to an outer side. This makes it possible to hold the lower lip part 52 of the dust cover 18 more stably in the fitting groove 48 without making a lower end side of the outer peripheral surface of the receiving part 38 project more than necessary from the outer peripheral surface of the housing body 37, specifically, without providing the projecting part 45. Thus, the outer diameter dimension of the housing 17 can be further reduced, so that the size of the housing 17 and that of the ball joint 11 can be further reduced.

Not according to the invention, the angle α of the outer peripheral surface of the receiving part 38 relative to the axis-perpendicular direction R may be set at about 90°. Specifically, the receiving part 38 may have a linear circular cylindrical shape having a diameter dimension substantially constant in the axis direction of the housing body 37. Even in this case, working effect similar to that of each of the aforementioned embodiments can still be achieved.

The ball joint 11 according to each of the aforementioned embodiments is applicable not only as a ball joint for use in a suspension device or a steering device but also as any ball joint for use in a vehicle or as any ball joint for use in an object other than a vehicle.

### INDUSTRIAL APPLICABILITY

The present invention can suitably be used in a suspension device or a steering device of a vehicle such as an automobile, for example.

### REFERENCE SIGNS LIST

11 Ball joint
15 Ball stud corresponding to ball-side member
16 Ball sheet corresponding to bearing sheet
17 Housing
18 Dust cover
21 Ball part
22 Stud part corresponding to shaft part
31 Sliding contact surface corresponding to holding surface
32 Upper opening corresponding to opening
34 Sheet inflected part
35 Inner chamber
36 Opening part
37 Housing body
38 Receiving part
39 Deformed part
48 Fitting groove corresponding to holding part

## Claims

1. A ball joint (11) comprising a housing (17), a bearing sheet (16) and a ball-side member (15), the ball-side member having a ball part (21) and a shaft part (22) projecting from the ball part (21), wherein the housing (17) comprises:
a circular cylindrical housing body (37) including an inner chamber (35) housing the bearing sheet (16) that holds the ball part (21) of the ball-side member (15) in a manner that allows rotation of the ball part (21), the housing body (37) including an opening part (36) communicating with the inner chamber (35) and being provided on at least one end portion of the housing body (37), the opening part (36) through which the shaft part (22) projecting from the ball part (21) of the ball-side member (15) is inserted;
a receiving part (38) formed on one end side of the housing body (37);
and a deformed part (39) provided adjacent to the receiving part (38) on the one end side and forming an edge portion of the opening part (36) of the housing body (37);
wherein the housing (17) of the ball joint (11) comprises an inflected part (40) located between the receiving part (38) and the deformed part (39), wherein the outer peripheral surface of the receiving part (38) extends from the inflected part (40) in a direction having an acute angle (α) which is less than 90° relative to an axis-perpendicular direction (R) of the housing body (37), wherein an outer peripheral surface of the deformed part (39) extends from the inflected part (40) in a direction having an angle (β) relative to the axis-perpendicular direction (R) of the housing body (37), and wherein the sum of the angle (α) and the angle (β) is less than 180°,
**characterised in that**
the deformed part (39) is plastically deformed in response to application of a load acting in a direction along an axis direction of the housing body (37) and forms a pressing part (46) projecting toward an inner side of the housing body (37) which holds the bearing sheet (16) and an opposite receiving part (47) projecting toward an outer side opposite the inner side of the housing body (37), forming a holding part (48) between the opposite receiving part (47) and the receiving part (38), the holding part (48) holding in use an end portion of a dust cover (18) covering the opening part (36); and
the housing (17) further comprises a projecting part (45) formed in an end portion of the outer peripheral surface of the receiving part (38), which projects in the outer radial direction from an outer peripheral surface of the housing body (37).

2. The ball joint (11) according to claim 1, wherein the bearing sheet (16) is cylindrical and includes a holding surface (31) and an opening (32) provided on at least one end portion of the bearing sheet (16), the holding surface (31) holding the ball part (21) in a manner that allows rotation of the ball part (21), the opening (32) being formed in the holding surface (31) and through which the shaft part (22) is inserted, the ball joint (11) further comprising a cylindrical dust cover (18) having one end portion held on the shaft part (22) of the ball-side member (15), the dust cover (18) having an opposite end portion held by the holding part (48) of the housing (17), thereby covering the opening part (36) of the housing (17).

3. The ball joint (11) according to claim 2, wherein the bearing sheet (16) includes a sheet inflected part (34), and wherein the bearing sheet (16) is formed to be thicker gradually from the sheet inflected part (34) toward the opening side.

## Patentansprüche

1. Kugelgelenkt (11), das ein Gehäuse (17), ein Lagerblatt (16) und ein kugelseitiges Element (15) aufweist, wobei das kugelseitige Element ein Kugelteil (21) und ein Wellenteil (22) aufweist, das von dem Kugelteil (21) absteht, wobei das Gehäuse (17) aufweist:
einen zirkulären zylindrischen Gehäusekörper (37), der eine Innenkammer (35) aufweist, die das Lagerblatt (16) aufnimmt, welches das Kugelteil (21) des kugelseitigen Elements (15) derart hält, das eine Drehung des Kugelteils (21) möglich ist, wobei der Gehäusekörper (37) ein Öffnungsteil (36) aufweist, das mit der Innenkammer (35) kommuniziert und auf mindestens einem Endabschnitt des Gehäusekörpers (37) vorgesehen ist, wobei durch das Öffnungsteil (36) das von dem Kugelteil (21) des kugelseitigen Elements (15) abstehende Wellenteil (22) eingesetzt ist;
ein Empfangsteil (38), das auf einer Endseite des Gehäusekörpers (37) ausgebildet ist;
und ein verformtes Teil (39), das benachbart zu dem Empfangsteil (38) auf der einen Endseite vorgesehen ist und einen Kantenabschnitt des Öffnungsteils (36) des Gehäusekörpers (37) bildet;
wobei das Gehäuse (17) des Kugelgelenks (11) einen gekrümmten Teil (40) aufweist, der sich zwischen dem Empfangsteil (38) und dem verformten Teil (39) befindet, wobei sich die Außenumfangsfläche des Empfangsteil (38) von dem gekrümmten Teil (40) in eine Richtung mit einem spitzen Winkel (α) erstreckt, der kleiner als 90° relativ zu einer achsensenkrechten Richtung (R) des Gehäusekörpers (37) ist, wobei sich eine Außenumfangsfläche des verformten Teils (39) von dem gekrümmten Teil (40) in eine Richtung mit einem Winkel (β) relativ zu der achsensenkrechten Richtung (R) des Gehäusekörpers (37) erstreckt, und wobei die Summe des Winkels (α) und des Winkels (β) kleiner als 180° ist,
**dadurch gekennzeichnet, dass**
das verformte Teil (39) plastisch verformt ist als Reaktion auf das Aufbringen einer Last, die in einer Richtung entlang einer Achsenrichtung des Gehäusekörpers (37) wirkt und ein Pressteil (46) bildet, das zu einer Innenseite des Gehäusekörpers (37) absteht, die das Lagerblatt (16) trägt, sowie ein gegenüberliegendes Empfangsteil (47) bildet, das zu einer Außenseite gegenüber der Innenseite des Gehäusekörpers (37) absteht, die ein Halteteil (48) zwischen dem gegenüberliegenden Empfangsteil (47) und dem Empfangsteil (38) bildet, wobei das Halteteil (48) im Gebrauch einen Endabschnitt einer Staubabdeckung (18) hält, die den Öffnungsteil (36) bedeckt; und
wobei das Gehäuse (17) ferner ein Vorsprungsteil (45) aufweist, das in einem Endabschnitt der Außenumfangsfläche des Empfangsteils (38) ausgebildet ist und in der äußeren radialen Richtung von einer Außenumfangsfläche des Gehäusekörpers (37) absteht.

2. Kugelgelenk (11) nach Anspruch 1, wobei das Lagerblatt (16) zylindrisch ist und eine Haltefläche (31) und eine Öffnung (32) aufweist, die auf mindestens einem Endabschnitt des Lagerblatts (16) vorgesehen sind, wobei die Haltefläche (31) das Kugelteil (21) derart trägt, dass eine Drehung des Kugelteils (21) möglich ist, wobei die Öffnung (32) in der Haltefläche (31) ausgebildet ist und das Wellenteil (22) durch die Öffnung eingesetzt ist, wobei das Kugelgelenkt (11) ferner eine zylindrische Staubabdeckung (18) mit einem Endabschnitt aufweist, der auf dem Wellenteil (22) des kugelseitigen Elements (15) gehalten wird, wobei die Staubabdeckung (18) einen gegenüberliegenden Endabschnitt aufweist, der von dem Halteteil (48) des Gehäuses (17) gehalten wird, wodurch das Öffnungsteil (36) des Gehäuses (17) bedeckt ist.

3. Kugelgelenkt (11) nach Anspruch 2, wobei das Lagerblatt (16) einen Blattbiegeteil (34) aufweist, und wobei das Lagerblatt (16) derart ausgebildet ist, dass es von dem Blattbiegeteil (34) zu der Öffnungsseite hin immer dicker wird.

## Revendications

1. Joint à rotule (11) comprenant un logement (17), une feuille d'appui (16) et un organe côté rotule (15), l'organe côté rotule ayant une partie de rotule (21) et une partie d'arbre (22) en saillie depuis la partie de rotule (21), dans lequel le logement (17) comprend :
un corps de logement cylindrique circulaire (37) comportant une chambre interne (35) logeant la feuille d'appui (16) qui maintient la partie de rotule (21) de l'organe côté rotule (15) d'une manière qui permet une rotation de la partie de rotule (21), le corps de logement (37) comportant une partie d'ouverture (36) communiquant avec la chambre interne (35) et prévue sur au moins une portion d'extrémité du corps de logement (37), la partie d'ouverture (36) à travers laquelle la partie d'arbre (22) en saillie depuis la partie de rotule (21) de l'organe côté rotule (15) est insérée ;
une partie de réception (38) formée sur un côté d'extrémité du corps de logement (37) ;
et une partie déformée (39) prévue adjacente à la partie de réception (38) sur le côté d'extrémité et formant une portion de bord de la partie d'ouverture (36) du corps de logement (37) ;
dans lequel le logement (17) du joint à rotule (11) comprend une partie infléchie (40) située entre la partie de réception (38) et la partie déformée (39), dans lequel la surface périphérique externe de la partie de réception (38) s'étend depuis la partie infléchie (40) dans une direction ayant un angle aigu (α) qui est inférieur à 90° par rapport à une direction perpendiculaire à l'axe (R) du corps de logement (37), dans lequel une surface périphérique externe de la partie déformée (39) s'étend depuis la partie infléchie (40) dans une direction ayant un angle (β) par rapport à la direction perpendiculaire à l'axe (R) du corps de logement (37), et dans lequel la somme de l'angle (α) et de l'angle (β) est inférieure à 180°,
**caractérisé en ce que**
la partie déformée (39) est déformée plastiquement en réponse à l'application d'une charge agissant dans une direction suivant une direction d'axe du corps de logement (37) et forme une partie de pression (46) en saillie vers un côté interne du corps de logement (37) qui maintient la feuille d'appui (16) et une partie de réception opposée (47) en saillie vers un côté externe opposé au côté interne du corps de logement (37), formant une partie de maintien (48) entre la partie de réception opposée (47) et la partie de réception (38), la partie de maintien (48) maintenant en utilisation une portion d'extrémité d'un pare-poussière (18) couvrant la partie d'ouverture (36) ; et
le logement (17) comprend en outre une partie saillante (45) formée dans une portion d'extrémité de la surface périphérique externe de la partie de réception (38), qui fait saillie dans la direction radiale externe depuis une surface périphérique externe du corps de logement (37).

2. Joint à rotule (11) selon la revendication 1, dans lequel la feuille d'appui (16) est cylindrique et comporte une surface de maintien (31) et une ouverture (32) prévue sur au moins une portion d'extrémité de la feuille d'appui (16), la surface de maintien (31) maintenant la partie de rotule (21) de manière telle à permettre une rotation de la partie de rotule (21), l'ouverture (32) étant formée dans la surface de maintien (31) et à travers laquelle la partie d'arbre (22) est insérée, le joint à rotule (11) comprenant en outre un pare-poussière cylindrique (18) ayant une portion d'extrémité maintenue sur la partie d'arbre (22) de l'organe côté rotule (15), le pare-poussière (18) ayant une portion d'extrémité opposée maintenue par la partie de maintien (48) du logement (17), pour ainsi couvrir la partie d'ouverture (36) du logement (17).

3. Joint à rotule (11) selon la revendication 2, dans lequel la feuille d'appui (16) comporte une partie infléchie de feuille (34), et dans lequel la feuille d'appui (16) est formée pour être plus épaisse progressivement depuis la partie infléchie de feuille (34) vers le côté ouverture.
